(19)

Europäisches
Patentamt
European
Patent Office
Office européen
des brevets

(11) **EP 2 222 015 A1**

(12) **EUROPEAN PATENT APPLICATION**

(43) Date of publication:
**25.08.2010 Bulletin 2010/34**

(51) Int Cl.:
**H04L 9/32** (2006.01)

(21) Application number: **09305164.7**

(22) Date of filing: **19.02.2009**

<table>
<tr><td>

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(71) Applicant: **Thomson Licensing
92130 Issy-les-Moulineaux (FR)**

</td><td>

(72) Inventor: **Joye, Marc
35510 Cesson-Sevigne (FR)**

(74) Representative: **Berthier, Karine
THOMSON
European Patent Operations
46 Quai Alphonse Le Gallo
92648 Boulogne Cedex (FR)**

</td></tr>
</table>

(54) **Method and device for hashing onto points of an elliptic curve**

(57)    Hashing onto elements of a group, in particular onto points of an elliptic curve. An input message is run through a "regular" hashing algorithm, such as e.g. SHA-1 and MD5, and used as a scalar in multiplication with an element of the group. The result is necessarily also an element of the group. An advantage is that the security of the hashing algorithm is the same as that of the underlying "regular" hashing algorithm. Also provided is an apparatus.

Figure 1

EP 2 222 015 A1

**Description**

<u>FIELD OF THE INVENTION</u>

The present invention relates generally to cryptography, and in particular to a hashing onto points of an elliptic curve.

<u>BACKGROUND OF THE INVENTION</u>

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

A hash function takes as input a message (usually represented as a string) and produces a hash value (also called 'message digest' or 'digital fingerprint') of fixed length. More specifically, a hash function $h$ maps bit-strings of arbitrary finite length onto bit-strings of fixed length (say, of $l$ bits); $h : \{0,1\}^* \to \{0,1\}^l; m \mapsto h(m)$. The hash value $h(m)$ is a compact representation of input string m.

For cryptographic applications, hash functions may require additional properties:

- Preimage resistance: it is computationally infeasible, given an output $v$, to find an input $u$ that hashes to $v$ (i.e. such that $h(u) = v$).
- Second-image resistance: it is computationally infeasible, given a pair $u$ and $v = h(u)$, to find a second input $u' \neq u$ that hashes to $v$ (i.e. such that $h(u') = v = h(u)$).
- Collision resistance: it is computationally infeasible to find any two different inputs $u$ and $u'$ that hash to the same value (i.e. such that $h(u) = h(u')$ with $u \neq u'$).
- Random oracle: several security proofs assume that the output of a hash function behaves as a random oracle. This is the so-called random oracle model, described by M. Bellare and P. Rogaway in "Random Oracles are Practical: A Paradigm for Designing Efficient Protocols"; in 1st ACM Conference on Computer and Communications Security, pages 62-73; ACM Press, 1993.

Hash functions are used in many cryptographic applications, including digital signatures, they play a fundamental role in the design of modern encryption algorithms, and they can serve to construct message authentication codes (MACs). A MAC is a family of functions $h_K$ indexed by a secret key $K$. MACs are described in for example FIPS 198 and FIPS 198-1, both called "The Keyed-Hash Message Authentication Code (HMAC)" (Federal Information Processing Standards Publication), the former published March 2002 and the latter (a draft, not yet approved) in June 2007.

Several cryptographic applications require hashing onto points of an elliptic curve. This includes identity-based encryption schemes such as the one described by D. Boneh and M. Franklin in "Identity-Based Encryption from the Weil Pairing" (SIAM Journal of Computing, 32(3): 586-615, 2003), which features a much simpler public-key infrastructure than traditional certificate-based cryptography. These schemes make use of bilinear pairings on elliptic curve points. In particular, the so-called 'extract' procedure requires a hash function mapping arbitrary finite strings to points of a given elliptic curve.

If **G** represents a group (or subgroup) of points of an elliptic curve, the problem is how to design a hash function taking as input a string m and produces a hash value which represents a point of the elliptic curve $H : \{0,1\}^* \to \mathbf{G}, m \mapsto H(m) \in \mathbf{G}$

One such method can be obtained from a technique described in § VI.2 of "A Course in Number Theory and Cryptography" by N. Koblitz, volume 114 of Graduate Texts in Mathematics, Springer-Verlag, 2nd edition, 1994. Let $K$ denote a large integer corresponding to a maximum number of 'tries' so that the failure probability of the method is roughly $2^{-K}$, as the probability of success for a try is about 0.5. Let also $E$ denote the elliptic curve over finite field $\mathbf{F}_q$ given by the Weierstraß equation

$$E : y^2 + a_1 xy + a_3 y = x^3 + a_2 x^2 + a_4 x + a_6$$

where curve parameters $a_i \in \mathbf{F}_q (1 \leq i \leq 6)$.

The set of points of the elliptic curve $E$ is given by the pairs $(x,y)$ that satisfy this Weierstraß equation together with a 'special' point $O$, which is called the point at infinity. Given an input message $m$, $v = h(m)$ is first computed, where

$h : \{0,1\}^* \rightarrow \{0,1\}^l$ is any suitable hash function (e.g. of the Secure Hash Standard (SHA) family) and $v$ is viewed as an integer in the range $[0,2^l-1]$. For each $j = 1,2,...,K$, $m'_j =_{VK} + j$ is defined. If $q > 2^l_K$ there is a one-to-one correspondence between the so-defined integers $m'_j$ and a set of elements of $\mathbf{F}_q$ using a polynomial representation. $X_j$ denotes the $\mathbf{F}_q$-element corresponding to $m'_j$. Then, for $j = 1,2,...,K$ the coordinate $x = X_j$ and an attempt is made to solve the Weierstraß equation for $y$. If a solution exists, it is denoted $y_j$. If $j$ denotes the smallest $j$ in $\{1, ..., K\}$ for which a solution is found, this defines $H(m) = (x_j,y_j) \in E$.

A problem with this method is that it leaks information about the input through side-channel analysis and fault analysis. This may compromise the security of the underlying application. This also introduces some bias in the output distribution, which may invalidate or weaken a security proof based on the random oracle model. Furthermore, the iterative nature of this method causes some inefficiency.

It will therefore be appreciated that there is a need for a hashing method onto points of an elliptic curve that overcomes at least some of the problems of the prior art. This invention provides such a solution.

## SUMMARY OF THE INVENTION

In a first aspect, the invention is directed to a method for hashing a string of arbitrary finite length onto an element of a group. A first hash value resulting from a first hashing algorithm mapping the string to a scalar is obtained. At least a first part of the scalar is multiplied with a predetermined first element of the group to obtain a second element of the group that is output.

In a first preferred embodiment, the group comprises the points of an elliptic curve.

In a second preferred embodiment, the first hash value for the string is obtained by calculation to obtain the scalar.

In a third preferred embodiment, the first element of the group is an element of maximal order.

In a fourth preferred embodiment, the method further comprises performing scalar multiplication between a second part of the first hash value and a predetermined third element of the group to obtain a fourth element of the group; and adding the second element of the group and the fourth element of the group to obtain a fifth element of the group.

In a second aspect, the invention is directed to a device for hashing a string of arbitrary finite length onto an element of a group. The device comprises means for obtaining a first hash value resulting from a first hashing algorithm mapping the string to a scalar; means for performing scalar multiplication between the first hash value and a predetermined first element of the group to obtain a second element of the group; and means for outputting the second element of the group.

In a first preferred embodiment, the group comprises the points of an elliptic curve.

In a second preferred embodiment, the means for obtaining the first hash value is adapted to calculate the first hash value.

In a third preferred embodiment, the first element of the group is an element of maximal order.

In a third aspect, the invention is directed to a computer program product comprising stored instructions that, when executed by a processor, performs the method of any of the embodiments of the first aspect.

## BRIEF DESCRIPTION OF THE DRAWINGS

Preferred features of the present invention will now be described, by way of non-limiting example, with reference to the accompanying drawings, in which:

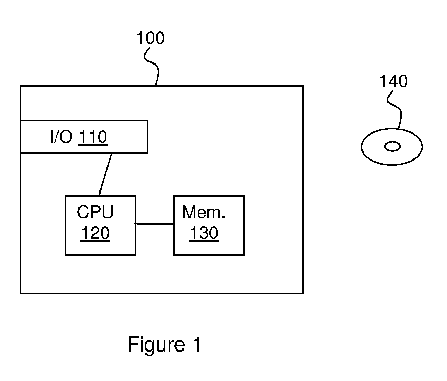

Figure 1 illustrates a device according to a preferred embodiment of the present invention.

## PREFERRED EMBODIMENT OF THE INVENTION

Compared to the iterative prior art solution, the present invention takes a radically different approach for hashing onto points of an elliptic curve. The method starts with a predetermined point on the elliptic curve and relies on a characteristic of groups: multiplication between an element of the group and a scalar automatically gives a, usually different, element of the group. To hash onto points of the elliptic curve, the output of a regular hashing algorithm is taken as the scalar and a point on the elliptic curve as the element of the group. The skilled person will appreciate that it is advantageous to use an element of maximal order as the predetermined point, as this enlarges the set of possible outputs.

More particularly, let $h : \{0,1\}^* \rightarrow \{0,1\}^l$ denote a regular hash function that maps a bit-string of arbitrary finite length to a bit-string of length $l$. Examples of such hash functions are Message Digest 5 (MD5) and SHA-1. Let also $E$ denote an elliptic curve, $\mathbf{G}$ a subgroup thereof, and $\mathbf{P}$ a point of $\mathbf{G}$ of order at least $2^l$. The hashing method according to a preferred embodiment of the present invention may then be defined as:

$$H : \{0,1\}^{*} \rightarrow \mathbf{G} : m \mapsto H(m) := [h(m)]\boldsymbol{P}.$$

This hash function is easy to implement and maps to points on the given elliptic curve. Further, for any two different input message $m$ and $m$', it follows that $H(m) = H(m')$ if and only if $h(m) = h(m')$, since ord($\boldsymbol{P}$) $\geq$: $2^l$. As a result, the security of the hash function $H$ is the same as that of the underlying hash function $h$. It will be appreciated that, as generic attacks against hash functions and elliptic curves are square-root attacks, the proposed construction is optimal.

The skilled person will appreciate that a number of variants of the method are possible. For instance, one or more predetermined elements of the group may be added after the multiplication. Another possibility is to perform separate scalar multiplications between the hash value and a plurality of elements in the group and thereafter to add the results (although this amounts to the same thing as multiplying the scalar with the result of the addition of the elements, as this addition yields a further element).

Yet another possibility is to obtain a scalar hash value that is separated into $n$, advantageously distinct, parts, perform scalar multiplication between the parts and $n$ different elements of the group and then add the results. In other words (illustrating the variant for $n=2$): $h(m) = h_1 \| h_2$ and $H(m) = [h_1]\boldsymbol{P_1} + [h_2]\boldsymbol{P_2}$, where $\boldsymbol{P_1}$ and $\boldsymbol{P_2}$ are elements in the group.

Figure 1 illustrates a device according to a preferred embodiment of the present invention. The device 100 comprises at least one interface unit 110 adapted for communication with other devices (not shown), at least one processor 120 and at least one memory 130 adapted for storing data, such as intermediary calculation results. The processor 120 is adapted to perform the method previously described herein by obtaining, possibly by calculation, a hash value of an input string, using the hash value as a scalar for multiplication with an element of a group, advantageously a point of an elliptic curve, and to output the result. A computer program product 140 such as a CD-ROM or a DVD comprises stored instructions that, when executed by the processor 120, performs the method according to any of the embodiments of the invention.

The method of the invention may be used whenever input values must be mapped to points of elliptic curves. The method is fully generic and can accommodate any known (regular) hash function, including those recommended in cryptographic standards, such as MD5, SHA, and HMAC,. More importantly, the security of the method is the same as that of the underlying (regular) hash function.

The skilled person will appreciate that the method according to a preferred embodiment of the present invention is not limited to elliptic curves; it can readily be applied to any group, such as for example hyperelliptic curves or the multiplicative group of a finite field or finite ring, or a subgroup thereof.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference signs appearing in the claims are by way of illustration only and shall have no limiting effect on the scope of the claims.

## Claims

1. A method for hashing a string of arbitrary finite length onto an element of a group, the method comprising the steps, in a device, of:

   obtaining a first hash value resulting from a first hashing algorithm mapping the string to a scalar;
   performing scalar multiplication between at least a first part of the first hash value and a predetermined first element of the group to obtain a second element of the group; and
   outputting the second element of the group.

2. The method of claim 1, wherein the group comprises the points of an elliptic curve.

3. The method of claim 1, wherein the step of obtaining the first hash value comprises the steps of obtaining the string and calculating the first hash value for the string to obtain the scalar.

4. The method of claim 1, wherein the first element of the group is an element of maximal order.

5. The method of claim 1, wherein the method further comprises the steps of:

performing scalar multiplication between a second part of the first hash value and a predetermined third element of the group to obtain a fourth element of the group; and

adding the second element of the group and the fourth element of the group to obtain a fifth element of the group.

6. A device (100) for hashing a string of arbitrary finite length onto an element of a group, the device (100) comprising:

means (110; 120) for obtaining a first hash value resulting from a first hashing algorithm mapping the string to a scalar;

means (120) for performing scalar multiplication between the first hash value and a predetermined first element of the group to obtain a second element of the group; and

means (110; 120) for outputting the second element of the group.

7. The device of claim 6, wherein the group comprises the points of an elliptic curve.

8. The device of claim 6, wherein the means for obtaining the first hash value is adapted to calculate the first hash value.

9. The device of claim 6, wherein the first element of the group is an element of maximal order.

10. A computer program product (140) comprising stored instructions that, when executed by a processor, performs the method of any of claims 1 to 5.

Figure 1

Europäisches
Patentamt

European
Patent Office

Office européen
des brevets

**EUROPEAN SEARCH REPORT**

Application Number

EP 09 30 5164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BARRETO PAULO S. L. M. AND HAE KIM Y.: "Fast hashing onto ellitpic curves over fields of characteristic 3"[Online] 15 November 2001 (2001-11-15), pages 1-11, XP002541311 IACR website Retrieved from the Internet: URL:http://eprint.iacr.org/2001/098.pdf> [retrieved on 2009-08-12] * the whole document * ----- | 1-10 | INV. H04L9/32 |
| A | HAN SONG; YEUNG WINSON K Y; WANG JIE: "Identity-based confirmer signatures from pairings over elliptic curves" PROCEEDINGS OF THE 4TH ACM CONFERENCE ON ELECTRONIC COMMERCE, [Online] 9 June 2003 (2003-06-09), - 12 June 2003 (2003-06-12) pages 262-263, XP002541312 San diego california USA Retrieved from the Internet: URL:http://delivery.acm.org/10.1145/780000 /779989/p262-han.pdf?key1=779989&key2=8675 610521&coll=GUIDE&dl=GUIDE&CFID=48515992&C FTOKEN=63552357> [retrieved on 2009-08-11] * abstract * ----- | 1-10 | TECHNICAL FIELDS SEARCHED (IPC)  H04L |

The present search report has been drawn up for all claims

| Place of search | Date of completion of the search | Examiner |
|---|---|---|
| Munich | 13 August 2009 | Bec, Thierry |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Random Oracles are Practical: A Paradigm for Designing Efficient Protocols. **M. Bellare ; P. Rogaway.** 1st ACM Conference on Computer and Communications Security. ACM Press, 1993, 62-73

- **D. Boneh ; M. Franklin.** Identity-Based Encryption from the Weil Pairing. *SIAM Journal of Computing,* 2003, vol. 32 (3), 586-615
- **N. Koblitz.** A Course in Number Theory and Cryptography. Springer-Verlag, 1994, vol. 114